# EUROPEAN PATENT APPLICATION

(11) **EP 4 841 973 A1**
(43) Date of publication of application: **18.11.2026**
(21) Application number: 24915915.3
(22) Date of filing: 08.01.2024
(51) Int. Cl.: H04N 19/124

(54) **CODING METHOD, DECODING METHOD, ENCODER, DECODER, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HUANG, Hang, Dongguan, Guangdong 523860 (CN)
(74) Representative: Taor, Simon Edward William
(86) International application number: PCT/CN2024/071233
(87) International publication number: WO 2025/147833

(57) **Abstract**

An encoding method, a decoding method, an encoder, a decoder, and a storage medium are disclosed in this disclosure. At both the decoding end and the encoding end, when a first cross-component prediction mode is used for a current chroma block, a target cross-component model for the current chroma block is determined from a candidate cross-component model. A target cross-component model parameter of the current chroma block is determined according to one or more cross-component model parameters included in the target cross-component model. The target cross-component model parameter is stored. As such, by storing the target cross-component model parameter of the current chroma block for inheritance and use by subsequent chroma blocks without introducing additional bit consumption, adaptive prediction operations can be performed according to the inherited parameter, thereby improving the coding efficiency.

## Description

### TECHNICAL FIELD

Embodiments of the disclosure relate to the field of video coding technology, in particular to an encoding method, a decoding method, an encoder, a decoder, and a storage medium.

### BACKGROUND

Cross-component prediction is a video coding technology where a prediction value of a chroma sample is constructed with a reconstructed luma sample according to a correlation between components in the same coding block. A cross-component prediction mode includes a cross-component linear model (CCLM), a convolutional cross-component model (CCCM), a gradient and location based CCCM (GLCCCM), a cross-component prediction filtering mode, a derived cross-component prediction mode, or the like.

For the derived cross-component prediction mode, by borrowing cross-component models for other reconstructed blocks, an optimal cross-component model for a current block is derived, for cross-component prediction of the current block. However, when the derived cross-component prediction mode is used in an actual coding process, some model information of the current block is unable to be fully used by subsequent blocks to be encoded or decoded. Consequently, an improvement in prediction accuracy brought by the derived cross-component prediction mode is unable to be fully leveraged, which affects the coding efficiency.

### SUMMARY

An encoding method, a decoding method, an encoder, a decoder, and a storage medium are provided in embodiments of the disclosure. By storing a target cross-component model parameter of a current chroma block for inheritance and use by subsequent chroma blocks, the coding efficiency can be improved.

Technical solutions of embodiments of the disclosure can be implemented as follows.

In a first aspect, a decoding method is provided in embodiments of the disclosure. The method is applied to a decoder and includes the following. When the prediction parameter indicates that a first cross-component prediction mode is used for the current chroma block, a candidate cross-component model for the current chroma block is determined, where the candidate cross-component model includes one or more cross-component models, and the cross-component model includes one or more cross-component model parameters. A target cross-component model for the current chroma block is determined from the candidate cross-component model. A target cross-component model parameter of the current chroma block is determined according to one or more cross-component model parameters included in the target cross-component model. The target cross-component model parameter is stored.

In a second aspect, an encoding method is provided in embodiments of the disclosure. The method is applied to an encoder and includes the following. A candidate cross-component model for a current chroma block is determined, where the candidate cross-component model includes one or more cross-component models, and the cross-component model includes one or more cross-component model parameters. A target cross-component model for the current chroma block is determined from the candidate cross-component model. A prediction value of the current chroma block is determined according to one or more cross-component model parameters included in the target cross-component model. When it is determined according to the prediction value that a first cross-component prediction mode is used for the current chroma block, a target cross-component model parameter of the current chroma block is stored, where the target cross-component model is determined according to the one or more cross-component model parameters included in the target cross-component model.

In a third aspect, an encoder is provided in embodiments of the disclosure. The encoder includes a first determining unit, a first prediction unit, and a first storage unit. The first determining unit is configured to determine a candidate cross-component model for a current chroma block, where the candidate cross-component model includes one or more cross-component models, and the cross-component model includes one or more cross-component model parameters. The first determining unit is further configured to determine a target cross-component model for the current chroma block from the candidate cross-component model. The first prediction unit is configured to determine a prediction value of the current chroma block according to one or more cross-component model parameters included in the target cross-component model. The first storage unit is configured to store a target cross-component model parameter of the current chroma block, when it is determined according to the prediction value that a first cross-component prediction mode is used for the current chroma block, where the target cross-component model is determined according to the one or more cross-component model parameters included in the target cross-component model.

In a fourth aspect, an encoder is provided in embodiments of the disclosure. The encoder includes a first memory and a first processor. The first memory is configured to store a computer program executable by the first processor. The first processor is configured to perform the method in the second aspect when executing the computer program.

In a fifth aspect, a decoder is provided in embodiments of the disclosure. The decoder includes a decoding unit, a second determining unit, and a second storage unit. The decoding unit is configured to decode a bitstream to determine a prediction parameter of a current chroma block. The second determining unit is configured to determine a candidate cross-component model for the current chroma block, when the prediction parameter indicates that a first cross-component prediction mode is used for the current chroma block, where the candidate cross-component model includes one or more cross-component models, and the cross-component model includes one or more cross-component model parameters. The second determining unit is further configured to determine a target cross-component model for the current chroma block from the candidate cross-component model; and determine a target cross-component model parameter of the current chroma block according to one or more cross-component model parameters included in the target cross-component model. The second storage unit is configured to store the target cross-component model parameter.

In a sixth aspect, a decoder is provided in embodiments of the disclosure. The decoder includes a second memory and a second processor. The second memory is configured to store a computer program executable by the second processor. The second processor is configured to perform the method in the first aspect when executing the computer program.

In a seventh aspect, a computer-readable storage medium is provided in embodiments of the disclosure. The computer-readable storage medium is configured to store a bitstream generated according to the encoding method.

In an eighth aspect, a computer-readable storage medium is provided in embodiments of the disclosure. The computer-readable storage medium is configured to store a computer program which, when executed, is operable to implement the method in the first aspect or the method in the second aspect.

An encoding method, a decoding method, an encoder, a decoder, and a storage medium are provided in embodiments of the disclosure. At both the decoding end and the encoding end, when a first cross-component prediction mode is used for a current chroma block, a target cross-component model for the current chroma block is determined from a candidate cross-component model. A target cross-component model parameter of the current chroma block is determined according to one or more cross-component model parameters included in the target cross-component model. The target cross-component model parameter is stored. As such, by storing the target cross-component model parameter of the current chroma block for inheritance and use by subsequent chroma blocks without introducing additional bit consumption, adaptive prediction operations can be performed according to the inherited parameter, thereby improving the coding efficiency.

### BRIEF DESCRIPTION OF THE DRAWINGS

The accompanying drawings described herein are intended for further understanding of the disclosure and constitute part of the disclosure. Exemplary embodiments of the disclosure as well as elaborations thereof are intended for explaining, rather than limiting, the disclosure. In the accompanying drawings:
FIG. 1 is a schematic block diagram of an encoder provided in embodiments of the disclosure.
FIG. 2 is a schematic block diagram of a decoder provided in embodiments of the disclosure.
FIG. 3 is a schematic diagram of a network architecture of a coding system provided in embodiments of the disclosure.
FIG. 4 is a schematic diagram of a current block, a neighbouring reconstructed chroma sample, and a neighbouring reconstructed luma sample in a cross-component linear model (CCLM) mode provided in embodiments of the disclosure.
FIG. 5A is a schematic diagram of a linear model parameter in a CCLM mode provided in embodiments of the disclosure.
FIG. 5B is a schematic diagram illustrating a manner of adjusting a linear model parameter in a CCLM_SLOPE mode provided in embodiments of the disclosure.
FIG. 6 is a schematic diagram illustrating sample classification for calculating multiple linear models in a multi-model linear model (MMLM) mode provided in embodiments of the disclosure.
FIG. 7 is a schematic diagram illustrating a filter shape provided in embodiments of the disclosure.
FIG. 8 is a schematic diagram of a chroma reference template area in a convolutional cross-component model (CCCM) mode provided in embodiments of the disclosure.
FIG. 9 is a schematic diagram of spatial input samples in a gradient and location based CCCM (GLCCCM) mode provided in embodiments of the disclosure.
FIG. 10 is a schematic diagram of spatial neighbouring candidate positions provided in embodiments of the disclosure.
FIG. 11 is a schematic diagram of spatial non-neighbouring candidate positions provided in embodiments of the disclosure.
FIG. 12 is a schematic diagram of a 3x3 low-pass filter provided in embodiments of the disclosure.
FIG. 13 is a schematic flowchart of a decoding method provided in embodiments of the disclosure.
FIG. 14 is a schematic flowchart of an encoding method provided in embodiments of the disclosure.
FIG. 15 is a schematic structural diagram of an encoder provided in embodiments of the disclosure.
FIG. 16 is a schematic diagram of a specific hardware structure of an encoder provided in embodiments of the disclosure.
FIG. 17 is a schematic structural diagram of a decoder provided in embodiments of the disclosure.
FIG. 18 is a schematic diagram of a specific hardware structure of a decoder provided in embodiments of the disclosure.
FIG. 19 is a schematic structural diagram of a coding system provided in embodiments of the disclosure.

### DETAILED DESCRIPTION

The following will describe technical solutions of embodiments of the disclosure with reference to the accompanying drawings in embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

Unless otherwise defined, all technical and scientific terms used herein have the same meaning as commonly understood by those skilled in the art. The terms used herein are for the purpose of describing embodiments of the disclosure only and are not intended to limit the disclosure.

In the following description, reference to "some embodiments" describes a subset of all possible embodiments, but it may be understood that "some embodiments" may refer to the same or different subsets of all possible embodiments and may be combined with each other without conflict.

It may be further noted that the terms "first/second/third" involved in embodiments of the disclosure are merely for distinguishing similar objects and do not imply a particular ordering with respect to the objects. It may be understood that "first/second/third" may, where appropriate, be interchanged in a particular order or sequence so that embodiments of the disclosure described herein may be implemented in an order other than that illustrated or described herein.

In a video picture, a coding block (CB) is generally represented by a first colour component, a second colour component, and a third colour component. The above three colour components are respectively a luma component, a blue chroma component, and a red chroma component. Specifically, the luma component is generally represented by symbol Y, the blue chroma component is generally represented by symbol Cb or U, and the red chroma component is generally represented by symbol Cr or V. Therefore, the video picture may be represented in a YCbCr format or a YUV format.

Before embodiments of the disclosure are described in further detail, the terms and terminology involved in the embodiments of the disclosure are explained, and the terms and terminology involved in the embodiments of the disclosure are applicable to the following explanations:
moving picture experts group (MPEG)
international standardization organization (ISO)
international electrotechnical commission (IEC)
joint video experts team (JVET)
alliance for open media (AOM)
next-generation video coding standard H.266/versatile video coding (VVC)
VVC reference software test platform (VVC test model, VTM)
audio video standard (AVS)
high-performance model (HPM) for AVS

It may be understood that, digital video compression technology mainly involves compressing a huge amount of digital picture video data, so as to facilitate transmission, storage, or the like. With the surge of internet video and higher requirements for video clarity, although a lot of video data can be saved with existing digital video compression standards, at present, there is still a need for better digital video compression technology to reduce pressure on a bandwidth and a traffic of digital video transmission.

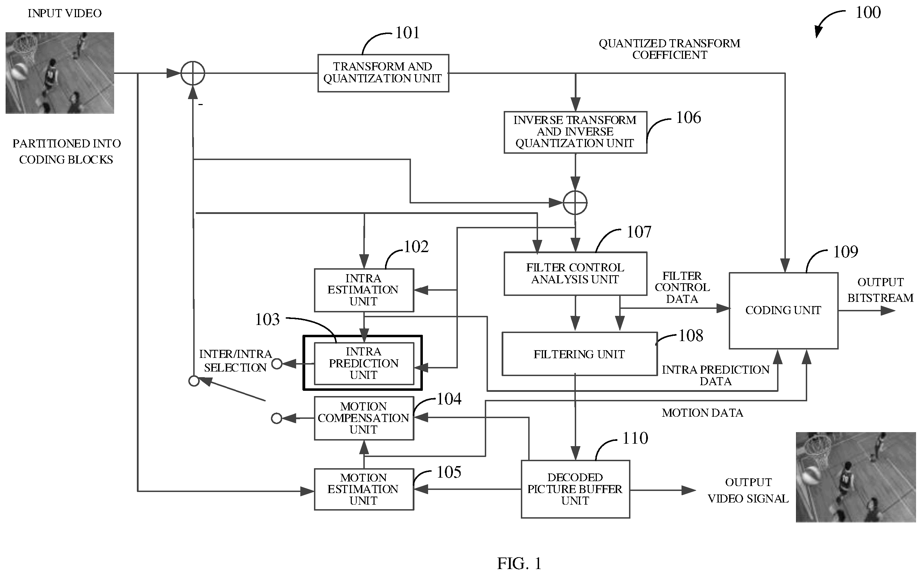

To explore a next-generation digital video compression technology, a new-generation reference software model, i.e., an enhanced compression model (ECM), is developed based on the reference software VTM for the latest video coding standard H.266/VVC. Existing video compression technologies are based on traditional block-based coding. Reference is made to FIG. 1 which is a schematic block diagram of an encoder provided in embodiments of the disclosure. As illustrated in FIG. 1, the encoder (specifically, "video encoder") 100 includes units such as a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109, and a decoded picture buffer unit 110. The filtering unit 108 may implement deblocking filtering and sample adaptive offset (SAO) filtering, and the encoding unit 109 may implement header information coding and context-based adaptive binary arithmetic coding (CABAC). An input raw video signal may be partitioned by a coding tree unit (CTU) to obtain a video encoding block. The video encoding block is transformed by the transform and quantization unit 101 processing residual sample information obtained after intra or inter prediction, which includes transforming the residual information from the sample domain to the transform domain and quantizing the resulting transform coefficients to further reduce the bit rate. The intra estimation unit 102 and intra prediction unit 103 are configured to perform intra prediction on the video encoding block. Specifically, the intra estimation unit 102 and intra prediction unit 103 are configured to determine an intra prediction mode to be used for encoding the video encoding block. The motion compensation unit 104 and motion estimation unit 105 are configured to perform inter prediction coding of the received video encoding block relative to one or more reference blocks within one or more reference pictures, to provide temporal prediction information. The motion estimation performed by the motion estimation unit 105 involves generating an MV(s), which can estimate the motion of the video encoding block. Then the motion compensation unit 104 performs motion compensation based on the MV determined by the motion estimation unit 105. After determining the intra prediction mode, the intra prediction unit 103 is further configured to provide the selected intra prediction data to the encoding unit 109, and the motion estimation unit 105 also transmits the calculated MV data to the encoding unit 109. In addition, the inverse transform and inverse quantization unit 106 is configured to reconstruct the video encoding block by reconstructing a residual block in the sample domain. The reconstructed residual block is then filtered by the filter control analysis unit 107 and filtering unit 108 to remove blocking effect artifacts, and then the reconstructed residual block is added to a prediction block within a picture in the decoded picture buffer unit 110 to produce the reconstructed video encoding block. The encoding unit 109 is configured to encode various encoding parameters and quantized transform coefficients. In the CABAC-based encoding algorithm, context content may be based on neighbouring coding blocks and may be used to encode information indicating the determined intra prediction mode, outputting the bitstream of the video signal. The decoded picture buffer unit 110 is configured to store the reconstructed video encoding blocks for prediction reference. As the video picture encoding progresses, new reconstructed video encoding blocks are continuously generated and stored in the decoded picture buffer unit 110.

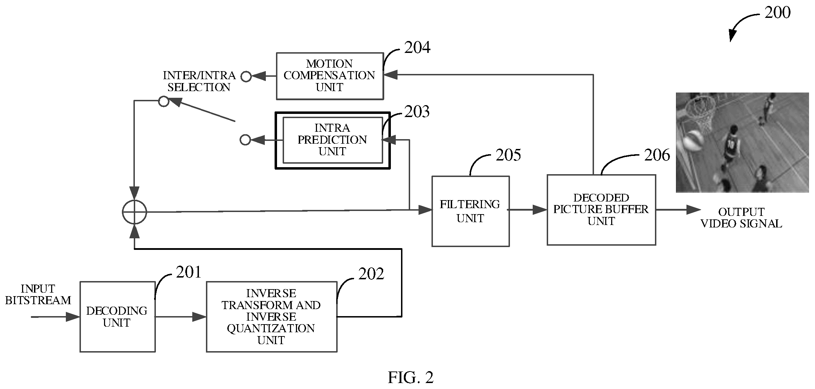

Reference is made to FIG. 2 which is a schematic block diagram of a decoder provided in embodiments of the disclosure. As illustrated in FIG. 2, the decoder (specifically, "video decoder") 200 includes a decoding unit 201, an inverse transform and inverse quantization unit 202, an intra prediction unit 203, a motion compensation unit 204, a filtering unit 205, a decoded picture buffer unit 206, etc. The decoding unit 201 may implement header information decoding and CABAC decoding, and the filtering unit 205 may implement deblocking filtering and SAO filtering. The input video signal is encoded as illustrated in FIG. 1 and output as a bitstream. The bitstream is then input to the decoder 200 and first passes through the decoding unit 201 to obtain the decoded transform coefficients. The inverse transform and inverse quantization unit 202 processes these transform coefficients to generate residual blocks in the sample domain. The intra prediction unit 203 may produce prediction data for the current video decoding block based on the determined intra prediction mode and data of previously decoded blocks from the current picture. The motion compensation unit 204 determines the prediction information for the video decoding block by parsing MVs and other related syntax elements, and uses this information to generate the prediction block for the video decoding block. The decoded video block is formed by summing the residual block from the inverse transform and inverse quantization unit 202 and the corresponding prediction block generated by the intra prediction unit 203 or motion compensation unit 204. The decoded video signal is then passed through the filtering unit 205 to remove blocking artifacts and thus improve video quality. The decoded video block is then stored in the decoded picture buffer unit 206, which stores reference pictures for subsequent intra prediction or motion compensation and is further configured to output the video signal, that is, the recovered original video signal is obtained.

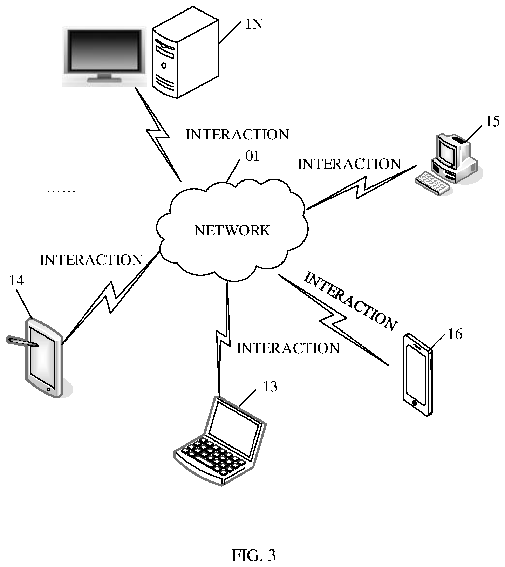

Further, a network architecture of a coding system including an encoder and a decoder is further provided in embodiments of the disclosure. FIG. 3 is a schematic diagram of a network architecture of a coding system provided in embodiments of the disclosure. As illustrated in FIG. 3, the network architecture includes one or more electronic devices 13 to 1N and a communication network 01, where the electronic devices 13 to 1N can perform video interaction through the communication network 01. The electronic device may be various types of devices having video coding functions during implementation. For example, the electronic device may include a mobile phone, a tablet computer, a personal computer, a personal digital assistant, a navigator, a digital phone, a video phone, a television, a sensing device, a server, etc., which is not limited herein. In addition, the decoder or the encoder described in the embodiments of the disclosure may be the electronic device.

It may be noted that, the method disclosed in embodiments of the disclosure is mainly applied in the intra prediction unit 103 as illustrated in FIG. 1 and the intra prediction unit 203 as illustrated in FIG. 2. In other words, embodiments of the disclosure may be applied to the encoder, to the decoder, or even to both the encoder and decoder, which is not limited in embodiments of the disclosure.

It may be further noted that, when applied to the intra prediction unit 103, a "current block" specifically refers to a current encoding block for which intra prediction is to be performed, and when applied to the intra prediction unit 203, a "current block" specifically refers to a current decoding block for which intra prediction is to be performed.

There may be multiple technologies for intra prediction, including a luma intra prediction mode and a chroma intra prediction mode. The embodiments of the disclosure aim to improve a cross-component prediction mode in the chroma intra prediction mode.

Related syntax of the cross-component prediction mode is illustrated in Table 1.

**Table 1**

| | |
|---|---|
| intra_chroma_pred_mode(){ | |
| if( getUseLMChroma() ){ | |
| is**LMCMode** | ae(v) |
| if( isLMCMode ) { /* LM chroma mode */ | |
| if( getUseCCMerge() ) { | |
| **cclmMrgFlag** | ae(v) |
| } | |
| if( cclmMrgFlag ) | |
| **cclmMrgIdx** | ae(v) |
| else { | |
| **cclmModeIdx** | ae(v) |
| if ( isCCCMEnabled ) { | |
| **cccmFlag** | ae(v) |
| if ( cccmFlag ) { | |
| **cccmNoSubFlag** | ae(v) |
| if ( !cccmNoSubFlag ) | |
| **glCccmFlag** | ae(v) |
| } | |
| } | |
| if ( hasGlmFlag( ) ) { | |
| **glmFlag** | ae(v) |
| if ( glmFlag ) | |
| **glmIdc** | ae(v) |
| } | |
| if (!cccmFlag && hasCclmDeltaFlag() ) | |
| **cclmDeltaFlags** | ae(v) |
| if (cclmDeltaFlags) { | |
| **bothActiveCclmDelta** | ae(v) |
| if ( bothActiveCclmDelta ) { | |
| cclmOffsetsCbFlag = 1 | |
| cclmOffsetsCrFlag = 1 | |
| } else { | |
| **cclmOffsetsCbFlag** | ae(v) |
| if ( isMultiModeLM() && !cclmOffsetsCbFlag ) | |
| **cclmOffsetsCrFlag** | ae(v) |
| else | |
| cclmOffsetsCrFlag = !cclmOffsetsCbFlag | |
| } | |
| if (cclmOffsetsCbFlag) | |
| cclmDelta(cclmOffsetsCb) | |
| if (cclmOffsetsCrFlag) | |
| cclmDelta(cclmOffsetsCb) | |
| } | |
| } | |
| } else if | |
| ... | |
| } | |

### 1.1 Cross-component prediction mode

### a) Cross-component linear model (CCLM)

The main idea of a CCLM prediction mode is to reduce cross-component redundancy and perform cross-component prediction. In particular, a prediction value of a chroma sample is mainly constructed with a reconstructed luma sample of the same coding block, and a linear relationship thereof is generally illustrated in the following formula (1). ${pred}_{C} \left(i, j\right) = a ⋅ {rec}_{L} ′ \left(i, j\right) + b$ (1)

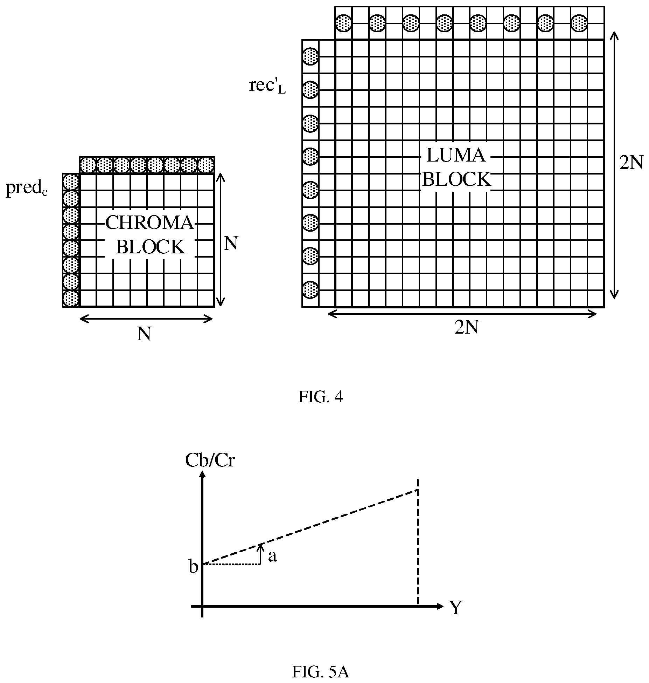

In the above, pred_{c}(i,j) represents a chroma prediction sample of a current coding unit (CU), and rec_{L}'(i,j) represents a down-sampled reconstructed luma sample of the current CU. a and b are referred to as linear model parameters (where a is a scaling parameter, and b is an offset parameter), and are calculated from neighbouring chroma samples and neighbouring luma samples. Since the linear model herein can be obtained through calculation at both the encoding end and the decoding end, the linear model does not need to be signalled in a bitstream. FIG. 4 provides an example of a current block, a neighbouring reconstructed chroma sample, and a neighbouring reconstructed luma sample in a CCLM mode.

In addition to jointly calculating the linear model parameters by using both top reference samples and left reference samples, there are two other calculation manners for a model parameter(s). That is, there are two other modes in CCLM, which are referred to as a cross-component linear model top (CCLM-T) mode and a cross-component linear model left (CCLM-L) mode.

In the CCLM-T mode, the linear model parameters are calculated by using only the top reference samples.

In the CCLM-L mode, the linear model parameters are calculated by using only the left reference samples.

To further improve the coding efficiency of the CCLM, many improvements have been made to the CCLM in the ECM, including CCLM_SLOPE, a multi-model linear model (MMLM), a convolutional cross-component model (CCCM), etc. The following will give a brief introduction to some improvements.

In CCLM_SLOPE, the calculated linear model parameters can be adjusted in the following manner. $a ′ = a + u , b ′ = b - u * yr$

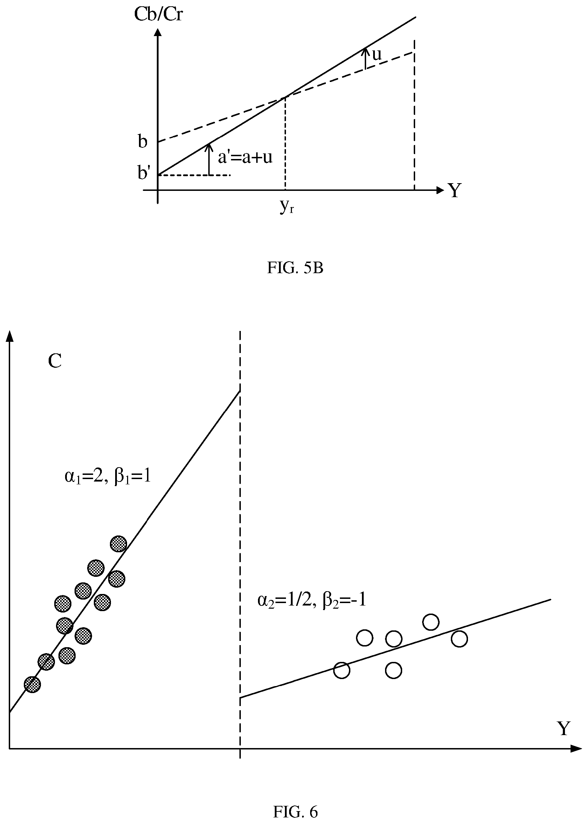

A prediction sample is calculated by using updated linear model parameters a' and b'. Through this improvement, a mapping function is tilted or rotated around a point with luma value *yr*, where *yr* is generally an average of reference luma samples. FIG. 5A is a schematic diagram of a linear model parameter in a CCLM mode, and FIG. 5B is a schematic diagram illustrating a manner of adjusting a linear model parameter in a CCLM_SLOPE mode.

In the CCLM, only one linear model exists between luma and chroma of the same CU. In the MMLM, multiple models can be provided for the same CU. Neighbouring luma and chroma samples are classified into different classes according to a classification threshold, and samples in each class are used for deriving different model parameters. FIG. 6 provides an example of sample classification for calculating multiple linear models in an MMLM mode.

### b) Convolutional cross-component model (CCCM)

In the CCCM mode, prediction samples are obtained through a set of convolutional filters. A convolutional 7-tap filter typically consists of a 5-tap spatial component, a non-linear term, and a bias term. A sample value is generally generated as illustrated in the following formula (2). ${pred}_{C} \left(x, y\right) = c 0 C + c 1 N + c 2 S + c 3 E + c 4 W + c 5 P + c 6 B$ (2)

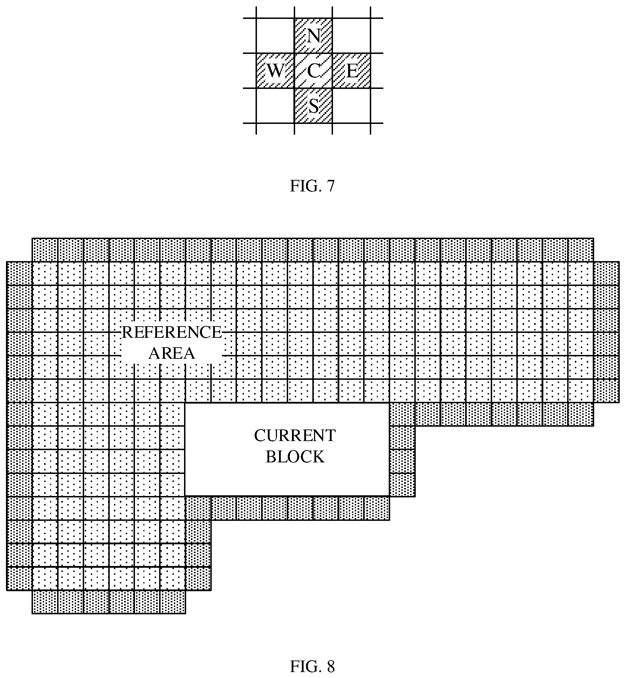

The spatial component of this filter is illustrated in FIG. 7.

C represents a corresponding luma sample, and N, S, W, and E represent samples located above, below, on the left, and on the right of the corresponding sample, respectively.

The non-linear term P is represented as power of two of the center luma sample C and scaled to the sample value range of the content. $P = \left(C*C+midVal\right) ≫ bitDepth$

The bias term is set to a middle chroma value. $B = midVal$

bitDepth represents a bit depth. A value of midVal is determined according to a value of the bit depth. For example, when the bit depth is 10, the value of midVal is 512.

Parameters of a convolutional filter are also derived using neighbouring reconstructed samples. Different from the CCLM, a reference template area in the CCCM is illustrated in FIG. 8. The reference area generally includes six rows and six columns of reconstructed samples around a current block, as well as a top-right extension area and a bottom-left extension area. An outer ring of areas represents a spatial component extension section used in the convolutional filter. Filter coefficients are calculated by minimizing a mean squared error (MSE) between predicted and reconstructed chroma samples in the reference area. Further, the MSE minimization is performed by calculating auto-correlation matrix for the luma input and a cross-correlation vector between the luma input and chroma output.

There are also multiple derivatives of a cross-component prediction (CCP) merge mode based on a convolutional model, including a gradient and location based CCCM (GLCCCM), etc.

In the GLCCCM mode, reference is made to gradient information and location information of a current sample during derivation of a cross-component model, as illustrated in formula (3). ${pred}_{C} \left(x, y\right) = c 0 C + {c 1 G}_{y} + {c 2 G}_{x} + c 3 Y + c 4 X + c 5 P + c 6 B$ (3)

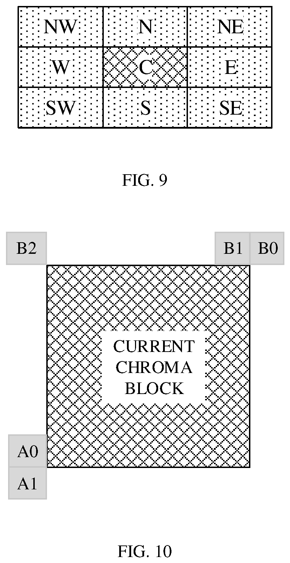

G_{y} and Gₓ represent gradients in the vertical direction and the horizontal direction respectively, and are calculated as follows, with input sample values illustrated in FIG. 9. ${G}_{y} = \left(2N+NW+NE\right) - \left(2S+SW+SE\right)$ ${G}_{x} = \left(2W+NW+SW\right) - \left(2E+NE+SE\right)$

Y and X represent a coordinate of the current sample in the vertical direction and a coordinate of the current sample in the horizontal direction respectively, and P and B are the same as those in an original CCCM scheme.

Similar to the CCLM, different reference area shapes may be selected for use in the CCCM, i.e., there are CCCM-T and CCCM-L modes. Similarly, multiple parameter models may also be selected for use in the CCCM, i.e., there is an MM-CCCM mode, and in this mode, a convolutional filter to be used for a current input sample is determined according to a threshold, so as to obtain a final prediction sample value.

### 1.2 CCP merge mode

In the various cross-component linear model prediction modes introduced in 1.1, all linear model parameters (ccmParam) are calculated from neighbouring reconstructed luma samples and neighbouring reconstructed chroma samples. Based on this, a technology called the CCP merge mode is proposed as a new cross-component prediction mode. In this mode, ccmParam of a current coding block can be directly inherited from a reconstructed block instead of being calculated. A flag cclmMrgFlag indicates whether the CCP merge mode is used for the current block. If cclmMrgFlag is true, i.e., the current block is in the CCP merge mode, then a ccmParam list ccmList[NUM_LMC_MERGE_CANDS] is constructed for the current block. This list is filled with existing ccmParam from spatial neighbouring coding blocks, spatial non-neighbouring coding blocks, and a historical information list. By default, a value of the maximum number of candidates in the existing list, NUM_LMC_MERGE_CANDS, is 12. If the list is not full in the above process, the list is filled according to preset default parameters, and a parameter to be used is indicated by a candidate index cclmMrgIdx.

A candidate list is filled in the following manner.

### 1. Spatial neighbouring candidates

First, spatial neighbouring blocks are checked. Positions of the neighbouring blocks are illustrated in FIG. 10, and a checking order is B1->A1->B0->A0->B2.

### 2. Spatial non-neighbouring candidates

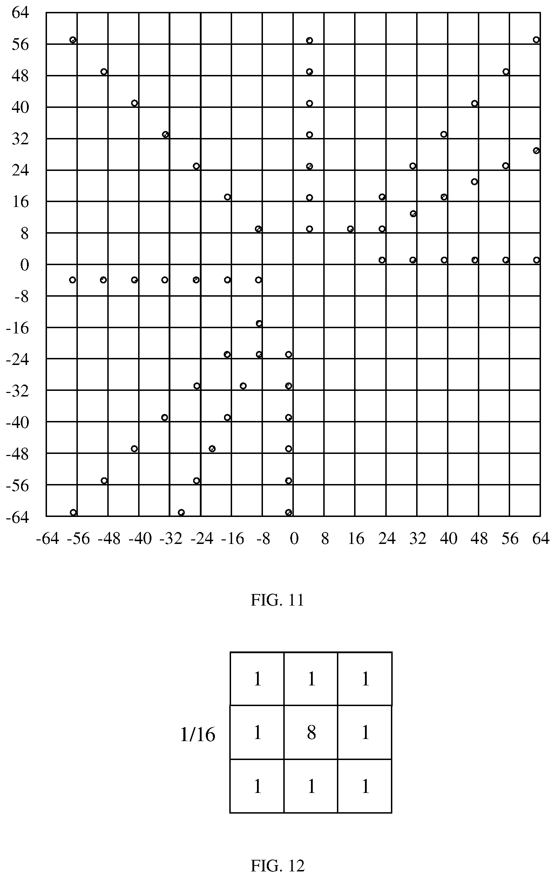

After all the spatial neighbouring candidates are checked, spatial non-neighbouring candidates are considered. A positional relationship thereof is illustrated in FIG. 11.

### 3. Parameter candidates based on historical information

A historical information-based table is maintained to contain most-recently used ccmParam, and this table is reset at the beginning of each CTU row. If a current list is not full after being filled with the spatial neighbouring candidates and the spatial non-neighbouring candidates, ccmParam in the history-based table is added to the list.

### 4. CCLM candidates with default parameters

If the list is not full, CCLM candidates with default scaling parameters are considered after the spatial neighbouring candidates and the spatial non-neighbouring candidates are checked. The default scaling parameters are {0, 1/8, -1/8, 2/8, -2/8, 3/8}. If there is a CCLM-type candidate(s) in the previous construction process, a scaling parameter (denoted by a_{first}) of the first added CCLM-type candidate is adjusted and added to the candidate list. In this case, the scaling parameters are {0, a_{first}+ {1/8, -1/8, 2/8, -2/8, 3/8, -3/8, 4/8, -4/8, 5/8, -5/8, 6/8}}.

An inheritance rule for a parameter is as follows.

In terms of inheriting a CCLM candidate, only a scaling parameter is inherited, and an offset parameter is re-calculated.

In terms of inheriting an MMLM candidate, the scaling parameter and a classification threshold may be inherited, and the offset parameter is re-calculated. However, if no neighbouring reconstructed samples are available in a class, the offset parameter is directly inherited.

In terms of inheriting a CCCM candidate, all convolution parameters and the classification threshold are inherited.

In terms of inheriting a gradient linear model (GLM) candidate, if GLM is a 3-parameter mode, all gradient indexes and model parameters are inherited. Otherwise, if GLM is a 2-parameter mode, only the scaling parameter is inherited, and the offset parameter needs to be re-calculated.

In terms of inheriting a chroma fusion mode, MMLM parameters derived in the cross-component prediction are inherited and used as candidates.

In terms of inheriting a CCP merge candidate, an inheritance mode depends on an inherited candidate mode.

### 1.3 Multi-model cross-component prediction mode filtering

In the cross-component prediction modes introduced in 1.1, there is a multi-model mode in which multiple models can be provided for the same CU, and then a cross-component model to be used is determined according to a relationship between a reference sample and a threshold, so as to obtain a final prediction value. Since the use of different cross-component models for neighbouring samples may result in a final prediction value that is not smooth enough, a 3x3 low-pass filter as illustrated in FIG. 12 is provided for the multi-model cross-component prediction mode. This filter is applied to a prediction sample generated according to the cross-component prediction mode. For samples at the boundary of the prediction sample, the filtering process may involve surrounding neighbouring reconstructed samples. For samples inside the prediction sample, the filtering process involves only internal prediction samples. For samples absent, internal prediction samples are used for padding according to specific situations. For this mode, in a multi-model cross-component prediction mode that satisfies a condition, a flag ccInsideFilter is encoded to indicate whether to use this mode. If a value of ccInsideFilter is 1, it indicates that a predicted sample value needs to be filtered. If the value of ccInsideFilter is 0, it indicates that the predicted sample value does not need to be filtered.

### 1.4 Decoder derived cross-component prediction (DDCCP)

Currently, there are a variety of types of cross-component prediction modes, and more flags are needed to indicate a specific cross-component prediction model type, template type, or sub-mode used for a current block. In a DDCCP mode, a new cross-component prediction mode is proposed. In this mode, whether this technology is used is indicated by a flag decoderDerivedCcpMode. If this technology is used, a cross-component model list is constructed at the decoding end, which is collectively referred to as a decoder derived cross-component model list hereinafter and denoted by DDList. This list includes some preset cross-component model types, such as CCCM and GLCCCM. In addition, if a condition permits, for each of these cross-component model types, whether to use a single model or a multi-model and whether to use a prediction filtering technology are included. These cross-component models may be derived from surrounding reconstructed samples according to their original mode schemes, or may be obtained from a candidate list in a CCP merge mode, i.e., by borrowing cross-component models for other decoded blocks. Then, template costs when applying cross-component models in the decoder derived cross-component model list to a reference template are calculated sequentially (where the reference template herein generally includes one row and one column of reconstructed samples neighbouring the current block, and the template cost generally refers to an error between a prediction value obtained by applying a current mode to a template and an original reconstructed value), and template costs corresponding to weighted fusion are calculated for pairwise combinations of the cross-component models. Finally, a scheme corresponding to a minimum template cost is selected as a prediction scheme for the current block, and a cross-component prediction model corresponding to the minimum template cost is selected as a cross-component prediction model for the current block for reference by other blocks.

However, when the cross-component prediction mode is used in an actual coding process, some model information of the current block is unable to be fully used by subsequent blocks to be encoded or decoded. Consequently, an improvement in prediction accuracy brought by the derived cross-component prediction mode is unable to be fully leveraged, which affects the coding efficiency.

Based on this, an encoding method and a decoding method are provided in embodiments of the disclosure.

For better understanding of technical solutions of embodiments of the disclosure, the technical solutions of embodiments of the disclosure will be elaborated below. The related art above, as an optional scheme, can be arbitrarily combined with the technical solutions of embodiments of the disclosure, which shall all belong to the protection scope of embodiments of the disclosure. Embodiments of the disclosure include at least part of the following.

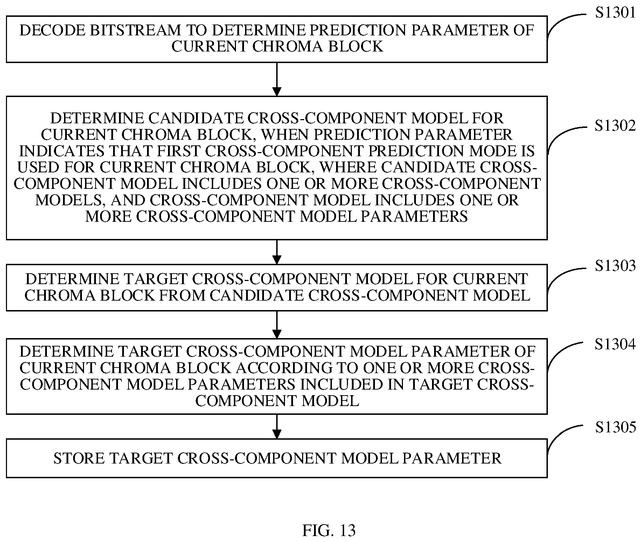

In an embodiment of the disclosure, reference is made to FIG. 13 which is a schematic flowchart of a decoding method provided in embodiments of the disclosure. As illustrated in FIG. 13, the method may include the following.

At S1301, a bitstream is decoded to determine a prediction parameter of a current chroma block.

It needs to be noted that, the prediction parameter indicates whether a first cross-component prediction mode is used for cross-component prediction of the current chroma block. If the prediction parameter indicates that the first cross-component prediction mode is used for cross-component prediction of the current chroma block, subsequent method operations for prediction in this embodiment of the disclosure are performed. If the prediction parameter indicates that the first cross-component prediction mode is not used for cross-component prediction of the current chroma block, another prediction mode is used for prediction. Exemplarily, when a value of the prediction parameter is 1, it is determined that the first cross-component prediction mode is used, and when the value of the prediction parameter is 0, it is determined that the first cross-component prediction mode is not used.

The first cross-component prediction mode may be a template-based cross-component model derivation mode. Specifically, in the first cross-component prediction mode, a candidate cross-component model is applied to a reference template of the current chroma block, and according to a template cost(s), a target cross-component model is selected for prediction of the current chroma block and is used as a reference for other blocks.

In some embodiments, the first cross-component prediction mode may specifically be a DDCCP mode, a CCP merge mode, or the like.

At S1302, when the prediction parameter indicates that the first cross-component prediction mode is used for the current chroma block, a candidate cross-component model for the current chroma block is determined, where the candidate cross-component model includes one or more cross-component models, and the or more cross-component model includes one or more cross-component model parameters.

In some embodiments, the candidate cross-component model includes at least one of: one or more preset cross-component models, or one or more cross-component models in a candidate list of CCP merge modes for the current chroma block.

The one or more preset cross-component models may include at least one of: one or more models in a CCLM mode, one or more models in a CCCM mode, one or more models in a GLCCM mode, or the like. In some embodiments, the one or more preset cross-component models are determined according to historical information.

The candidate list of CCP merge modes may be established according to cross-component models for reconstructed reference blocks of the current chroma block. This list is filled with existing cross-component model parameters from spatial neighbouring reconstructed reference blocks, spatial non-neighbouring reconstructed reference blocks, and a historical information list. By default, a value of the maximum number of candidates in the existing list, NUM_LMC_MERGE_CANDS, is 12. If the list is not full in the above process, the list is filled according to preset default parameters. Part or all of cross-component models in the candidate list of CCP merge modes are used as candidate cross-component models for a current block. Exemplarily, a candidate cross-component model is determined from the candidate list of CCP merge modes according to a specific mode type and/or a specific model type.

In some embodiments, the one or more cross-component model parameters may include at least one of: a cross-component prediction mode type, a cross-component model type, a model parameter, or a prediction filtering flag. The cross-component prediction mode may include CCLM, CCCM, GLCCM, or the like. The cross-component model type may include a single model and a multi-model. The model parameter, such as a scaling parameter, an offset parameter, a convolution parameter, a classification threshold, or the like of a linear model, corresponds to the cross-component mode type and model type. The prediction filtering flag indicates whether to filter a prediction value during prediction of the current chroma block.

At S1303, a target cross-component model for the current chroma block is determined from the candidate cross-component model.

In some embodiments, the bitstream is decoded to determine an index of the target cross-component model, and the target cross-component model for the current chroma block is determined from the candidate cross-component model according to the index of the target cross-component model. That is to say, when it is determined that the first cross-component prediction mode is used, the target cross-component model may be determined according to the index idx. Further, a target cross-component model parameter of the current chroma block is determined according to cross-component model parameters corresponding to DDList[idx].

In some other embodiments, a prediction cost value of the candidate cross-component model is determined based on a template of the current chroma block, and the target cross-component model for the current chroma block is determined according to the prediction cost value. Herein, the prediction cost value may be understood as a template cost value, including but not limited to a sum of absolute differences (SAD), a sum of absolute transformed differences (SATD), a sum of squared errors (SSE), a mean absolute difference (MAD), a mean absolute error (MAE), a mean squared error (MSE), or the like. The candidate cross-component model is reordered based on the prediction cost value, where the smaller the prediction cost value, the higher a ranking position, and one or more cross-component models are selected based on the template cost value. That is to say, the target cross-component model includes one or more cross-component models, where "multiple" indicates two or more.

Exemplarily, the prediction cost value of the candidate cross-component model is determined based on the template of the current chroma block as follows. A first prediction sample value of the template of the current chroma block is determined by performing prediction on the template of the current chroma block according to one cross-component model and/or at least two cross-component models in the candidate cross-component model. Prediction cost values of the one cross-component model or the at least two cross-component models are determined according to the first prediction sample value and a first reconstructed sample value of the template of the current chroma block.

It needs to be noted that, each of cross-component models in the candidate cross-component model may be applied to the reference template of the current chroma block for prediction, to obtain the first prediction sample value of the template of the current chroma block. If weighted fusion prediction is allowed for the current chroma block, every two of the cross-component models in the candidate cross-component model may also be combined and applied to the reference template of the current chroma block for weighted fusion prediction, to obtain the first prediction sample value of the template of the current chroma block. Three or more of the cross-component models in the candidate cross-component model may also be combined and applied to the reference template of the current chroma block for weighted fusion prediction, to obtain the first prediction sample value of the template of the current chroma block.

Exemplarily, the target cross-component model for the current chroma block is determined according to the prediction cost value as follows. A first cross-component model corresponding to a minimum prediction cost value is determined according to the prediction cost values of the one cross-component model or the at least two cross-component models. Based on a determination, according to a fusion flag in the first cross-component model, that weighted fusion prediction is not to be performed on the current chroma block, it is determined that prediction is to be performed on the current chroma block according to the first cross-component model. Based on a determination, according to the fusion flag in the first cross-component model, that weighted fusion prediction is to be performed on the current chroma block, a second cross-component model is determined, and weighted fusion prediction is performed on the current chroma block according to the first cross-component model and the second cross-component model, where the second cross-component model includes one or more cross-component models. That is to say, the candidate cross-component model is reordered based on a prediction cost value corresponding to the template, and the target cross-component model may be directly determined according to a reordered list without introducing additional bit consumption.

Exemplarily, the target cross-component model for the current chroma block is determined according to the prediction cost value as follows. The candidate cross-component model is reordered according to the prediction cost value, to obtain a reordered cross-component model list. The target cross-component model is determined from the reordered cross-component model list according to an index of the target cross-component model. The smaller a template cost value of a model after reordering, the smaller a value of an index of the model, and thus encoding this index can save bitrate.

In some embodiments, the method further includes the following. A prediction value of the current chroma block is determined according to one or more cross-component model parameters included in the target cross-component model, and a reconstructed value of the current chroma block is determined according to the prediction value.

Exemplarily, a first prediction value is obtained by performing prediction on the current chroma block according to a first cross-component model. If a prediction filtering flag in the first cross-component model indicates filtering, the prediction value of the current chroma block is obtained by filtering the first prediction value.

Exemplarily, a first prediction value is obtained by performing prediction on the current chroma block according to a first cross-component model, and a second prediction value is obtained by performing prediction on the current chroma block according to a second cross-component model. If a prediction filtering flag in the first cross-component model indicates filtering, a prediction value of the first cross-component model is obtained by filtering the first prediction value. If a prediction filtering flag in the second cross-component model indicates filtering, a prediction value of the second cross-component model is obtained by filtering the second prediction value. The prediction value of the current chroma block is obtained by performing weighted fusion on the prediction value of the first cross-component model and the prediction value of the second cross-component model. A weighting factor may be determined according to a prediction cost value of each cross-component model, or may be a fixed weighting factor, or may be an average.

At S1304, a target cross-component model parameter of the current chroma block is determined according to one or more cross-component model parameters included in the target cross-component model.

The target cross-component model parameter may include one or more types of cross-component model parameters, which may be derived from the one or more cross-component model parameters included in the target cross-component model.

In some embodiments, the target cross-component model parameter includes a target prediction filtering flag. The target prediction filtering flag indicates whether to filter a prediction value during prediction of the current chroma block. Exemplarily, the target prediction filtering flag may be denoted by ccInsideFilter. If a value of ccInsideFilter is 1, it indicates that the prediction value needs to be filtered. If the value of ccInsideFilter is 0, it indicates that the prediction value does not need to be filtered. In the first cross-component prediction mode, by inheriting a prediction filtering flag of a reconstructed block, a determination on adaptive filtering operations for a prediction block can be made without introducing additional bit consumption, thereby improving the coding efficiency.

In some embodiments, the target prediction filtering flag of the current chroma block is determined according to a prediction filtering flag in the target cross-component model. The prediction filtering flag in the target cross-component model indicates whether to filter a prediction value when using the target cross-component model.

Exemplarily, the target cross-component model includes a first cross-component model, and the target prediction filtering flag of the current chroma block is determined according to the prediction filtering flag in the target cross-component model as follows. A prediction filtering flag in the first cross-component model is determined as the target prediction filtering flag. The first cross-component model may be an optimal cross-component model in the candidate cross-component model. In some embodiments, a prediction filtering flag in the optimal cross-component model is directly determined as the target prediction filtering flag of the current chroma block. In some other embodiments, in the first cross-component prediction mode and without weighted fusion, a prediction filtering flag in the optimal cross-component model is determined as the target prediction filtering flag of the current chroma block.

Exemplarily, the target cross-component model includes a first cross-component model and a second cross-component model. That is to say, two or more cross-component models may be determined from the candidate cross-component model based on template costs, and then the prediction value is obtained by performing weighted fusion on the current chroma block according to the two or more cross-component models.

Accordingly, the target prediction filtering flag of the current chroma block is determined according to the prediction filtering flag in the target cross-component model as follows. When a prediction filtering flag in the first cross-component model is a first value and a prediction filtering flag in the second cross-component model is the first value, it is determined that the target prediction filtering flag is the first value. Alternatively, when a prediction filtering flag in the first cross-component model is a first value or a prediction filtering flag in the second cross-component model is the first value, it is determined that the target prediction filtering flag is the first value.

Exemplarily, the first value may be 1, which indicates that the prediction value is to be filtered. In the first cross-component prediction mode and with weighted fusion, a prediction filtering flag of the current chroma block is determined according to prediction filtering flags in two cross-component models for weighted fusion. In some embodiments, a value of the prediction filtering flag of the current chroma block is set to 1 only when both prediction filtering flags in the two cross-component models are 1. In some other embodiments, if one of the prediction filtering flags in the two cross-component models is 1, the value of the prediction filtering flag of the current chroma block may be set to 1.

Exemplarily, the first value may also be 0, which indicates that the prediction value is not to be filtered. A value of a prediction filtering flag of the current chroma block is set to 0 only when both prediction filtering flags in two cross-component models are 0. In some other embodiments, if one of the prediction filtering flags in the two cross-component models is 0, the value of the prediction filtering flag of the current chroma block may be set to 0.

At S1305, the target cross-component model parameter is stored.

In some embodiments, a current block has a specific storage space (denoted by curCand in this embodiment of the disclosure) for storing cross-component model parameters of the current block for subsequent use. Exemplarily, when the target cross-component model parameter includes a target prediction filtering flag, a target cross-component filtering flag ccInsideFilter of the current chroma block is stored in curCand, which may be denoted by curCand.ccInsideFilter, for subsequent use.

In some embodiments, the target cross-component model parameter further includes at least one of a cross-component prediction mode type, a cross-component model type, a model parameter, or the like. These parameters are also stored in the specific storage space of the current block.

In a decoding process, for a block to be decoded, a cross-component model parameter of a corresponding block may be obtained from a cross-component model parameter storage space of a reconstructed block. Similar to the cross-component model parameter, a prediction filtering flag in a cross-component prediction parameter may also be obtained through inheritance when the first cross-component prediction mode is used for the current block. If the first cross-component prediction mode is used for the current block, a prediction filtering flag ccInsideFilter and other parameters of the current block are stored in curCand (where ccInsideFilter may be denoted by curCand.ccInsideFilter) for subsequent use, thereby improving the decoding efficiency.

Exemplarily, when the first cross-component prediction mode is a DDCCP mode, a decoding process is specifically as follows.

If the decoding end determines that the DDCCP mode is used for the current chroma block, the decoding end obtains a decoder cross-component model list DDList according to a derivation process of this mode. A size of this list is numDdccpModes, and a specific value thereof is constructed in the derivation process. If an index is denoted by idx and a value thereof ranges from 0 to numDdccpModes-1, then DDList[idx] may mean that information of a corresponding cross-component model in the list is found according to the index. The information of the cross-component model includes a cross-component mode type (CCLM, CCCM, GLCCCM, or the like), a model type (a single model or a multi-model), a cross-component model parameter (a model parameter corresponding to the cross-component mode type), a prediction filtering flag (whether to perform filtering after prediction), a fusion flag (whether to perform weighted fusion with prediction results of other models), and a template cost value (a cost when applying a current model to a template). After reordering based on the magnitude of template cost values, generally, the smaller the index, the smaller the template cost value, so a cross-component model denoted by DDlist[0] has a minimum template cost value. Then, whether weighted fusion is needed is determined according to DDlist[0].isFusion. If weighted fusion is not needed, the cross-component model denoted by DDlist[0] is used for prediction. If weighted fusion is needed, cross-component models denoted by DDlist[0] and DDlist[1] are used for prediction and then weighted fusion is performed. For each model, a prediction value is accordingly processed according to a prediction filtering flag in the current model. After the prediction process ends, a value of ccInsideFilter of a current block is set according to a prediction filtering flag in DDlist[0]. That is, if the prediction filtering flag in DDlist[0] is 1, the value of ccInsideFilter is set to 1, and if the prediction filtering flag in DDlist[0] is 0, the value of ccInsideFilter is set to 0. The value of ccInsideFilter is stored in a cross-component model architecture curCand of the current block, i.e., curCand.ccInsideFilter, for subsequent use. In the decoding process, for a block to be decoded, a cross-component model parameter of a corresponding block may be obtained from a cross-component model parameter storage space of a decoded block, thereby fully leveraging an improvement in prediction accuracy brought by the prediction filtering technology.

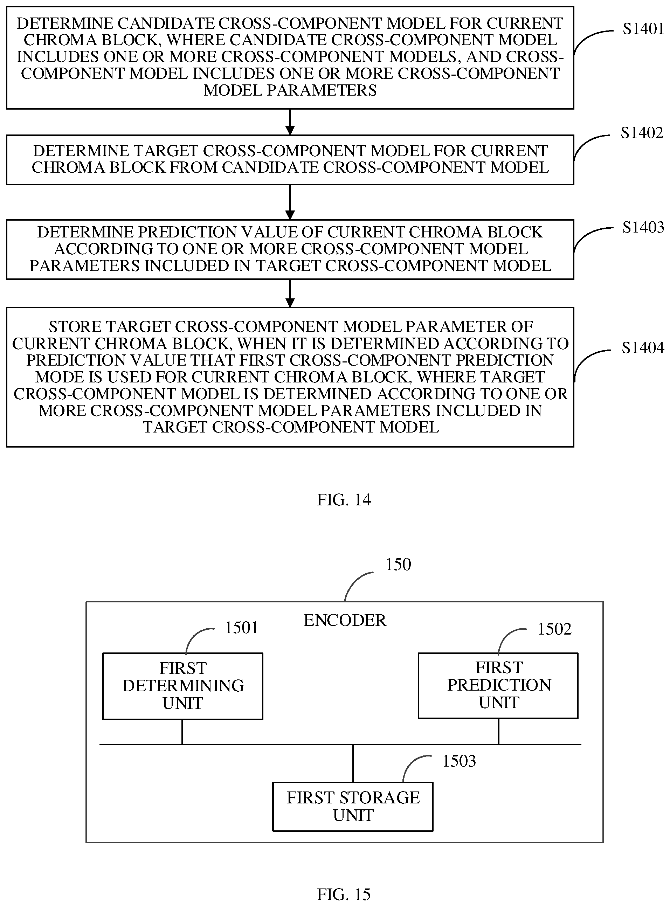

In another embodiment of the disclosure, reference is made to FIG. 14 which is a schematic flowchart of an encoding method provided in embodiments of the disclosure. As illustrated in FIG. 14, the method may include the following.

At S1401, a candidate cross-component model for a current chroma block is determined, where the candidate cross-component model includes one or more cross-component models, and the cross-component model includes one or more cross-component model parameters.

In some embodiments, when a first cross-component prediction mode is allowed to be used for cross-component prediction of the current chroma block, the candidate cross-component model for the current chroma block is determined. A syntax element indicating whether the first cross-component prediction mode is allowed to be used for cross-component prediction of the current chroma block may include at least one of: a CTU-level syntax element, a picture-level syntax element, a sequence-level syntax element, or the like. If allowed, the encoding end uses the first cross-component prediction mode provided in this embodiment of the disclosure for prediction and reconstruction of the current chroma block, and determines, by comparing a prediction cost value of the first cross-component prediction mode with a prediction cost value of another prediction mode, whether the first cross-component prediction mode is used.

The first cross-component prediction mode may be a template-based cross-component model derivation mode. Specifically, in the first cross-component prediction mode, the candidate cross-component model is applied to a reference template of the current chroma block, and according to a template cost(s), a target cross-component model is selected for prediction of the current chroma block and is used as a reference for other blocks.

In some embodiments, the first cross-component prediction mode may specifically be a DDCCP mode, a CCP merge mode, or the like.

At S1402, a target cross-component model for the current chroma block is determined from the candidate cross-component model.

In some embodiments, the target cross-component model for the current chroma block is determined by traversing the candidate cross-component model. Accordingly, the method further includes the following. When it is determined according to a prediction value that the first cross-component prediction mode is used for the current chroma block, an index of the target cross-component model is encoded. That is to say, by traversing the candidate cross-component model, if a rate-distortion optimization (RDO) cost value of the current chroma block obtained when using one or more cross-component models in the candidate cross-component model for cross-component prediction is an optimal cost value, then the index of the target cross-component model is encoded, so that the decoding end can determine a target cross-component prediction mode according to this index.

In some other embodiments, a prediction cost value of the candidate cross-component model is determined based on a template of the current chroma block, and the target cross-component model for the current chroma block is determined according to the prediction cost value. Herein, the prediction cost value may be understood as a template cost value, including but not limited to an SAD, an SATD, an SSE, an MAD, an MAE, an MSE, or the like. The candidate cross-component model is reordered based on the prediction cost value, where the smaller the prediction cost value, the higher a ranking position, and one or more cross-component models are selected based on the template cost value. That is to say, the target cross-component model includes one or more cross-component models, where "multiple" indicates two or more.

Exemplarily, the prediction cost value of the candidate cross-component model is determined based on the template of the current chroma block as follows. A first prediction sample value of the template of the current chroma block is determined by performing prediction on the template of the current chroma block according to one cross-component model and/or at least two cross-component models in the candidate cross-component model. Prediction cost values of the one cross-component model or the at least two cross-component models are determined according to the first prediction sample value and a first reconstructed sample value of the template of the current chroma block.

It needs to be noted that, each of cross-component models in the candidate cross-component model may be applied to the reference template of the current chroma block for prediction, to obtain the first prediction sample value of the template of the current chroma block. If weighted fusion prediction is allowed for the current chroma block, every two of the cross-component models in the candidate cross-component model may also be combined and applied to the reference template of the current chroma block for weighted fusion prediction, to obtain the first prediction sample value of the template of the current chroma block. Three or more of the cross-component models in the candidate cross-component model may also be combined and applied to the reference template of the current chroma block for weighted fusion prediction, to obtain the first prediction sample value of the template of the current chroma block.

Exemplarily, the target cross-component model for the current chroma block is determined according to the prediction cost value as follows. A first cross-component model corresponding to a minimum prediction cost value is determined according to the prediction cost values of the one cross-component model or the at least two cross-component models. Based on a determination, according to a fusion flag in the first cross-component model, that weighted fusion prediction is not to be performed on the current chroma block, it is determined that prediction is to be performed on the current chroma block according to the first cross-component model. Based on a determination, according to the fusion flag in the first cross-component model, that weighted fusion prediction is to be performed on the current chroma block, a second cross-component model is determined, and weighted fusion prediction is performed on the current chroma block according to the first cross-component model and the second cross-component model, where the second cross-component model includes one or more cross-component models. That is to say, the candidate cross-component model is reordered based on a prediction cost value corresponding to the template, and the target cross-component model may be directly determined according to a reordered list without introducing additional bit consumption.

Exemplarily, the target cross-component model for the current chroma block is determined according to the prediction cost value as follows. The candidate cross-component model is reordered according to the prediction cost value, to obtain a cross-component model list of a reordered list. An index of the target cross-component model is determined from the cross-component model list of the reordered list. The index of the target cross-component model is encoded. The smaller a template cost value of a model after reordering, the smaller a value of an index of the model, and thus encoding this index can save bitrate.

In some embodiments, the method further includes the following. A prediction value of the current chroma block is determined according to one or more cross-component model parameters included in the target cross-component model, and a reconstructed value of the current chroma block is determined according to the prediction value.

Accordingly, a first prediction value is obtained by performing prediction on the current chroma block according to a first cross-component model. If a prediction filtering flag in the first cross-component model indicates filtering, the prediction value of the current chroma block is obtained by filtering the first prediction value.

Accordingly, a first prediction value is obtained by performing prediction on the current chroma block according to a first cross-component model, and a second prediction value is obtained by performing prediction on the current chroma block according to a second cross-component model. If a prediction filtering flag in the first cross-component model indicates filtering, a prediction value of the first cross-component model is obtained by filtering the first prediction value. If a prediction filtering flag in the second cross-component model indicates filtering, a prediction value of the second cross-component model is obtained by filtering the second prediction value. The prediction value of the current chroma block is obtained by performing weighted fusion on the prediction value of the first cross-component model and the prediction value of the second cross-component model. A weighting factor may be determined according to a prediction cost value of each cross-component model, or may be a fixed weighting factor, or may be an average.

At S1403, a prediction value of the current chroma block is determined according to one or more cross-component model parameters included in the target cross-component model.

In some embodiments, the method further includes the following. A reconstructed value of the current chroma block is determined according to the prediction value. A prediction cost value of the first cross-component prediction mode is determined according to the reconstructed value and an original value of the current chroma block. When the prediction cost value of the first cross-component prediction mode is a minimum prediction cost value of the current chroma block, it is determined that the first cross-component prediction mode is used for the current chroma block. When the prediction cost value of the first cross-component prediction mode is not the minimum prediction cost value of the current chroma block, it is determined that the first cross-component prediction mode is not used for the current chroma block.

Herein, the prediction cost value may be understood as a prediction cost value obtained when the first cross-component prediction mode is used for the current chroma block, including but not limited to RDO, an SAD, an SATD, an SSE, an MAD, an MAE, an MSE, or the like. The encoding end determines an optimal prediction mode for the current chroma block by comparing prediction cost values corresponding to multiple prediction modes for the current chroma block.

In some embodiments, the method further includes the following. A target cross-component model parameter of the current chroma block is determined according to the one or more cross-component model parameters included in the target cross-component model.

The target cross-component model parameter may include one or more types of cross-component model parameters, which may be derived from the one or more cross-component model parameters included in the target cross-component model.

In some embodiments, the target cross-component model parameter includes a target prediction filtering flag. The target prediction filtering flag indicates whether to filter a prediction value during prediction of the current chroma block. Exemplarily, the target prediction filtering flag may be denoted by ccInsideFilter. If a value of ccInsideFilter is 1, it indicates that the prediction value needs to be filtered. If the value of ccInsideFilter is 0, it indicates that the prediction value does not need to be filtered.

In some embodiments, the method further includes the following. The target prediction filtering flag of the current chroma block is determined according to a prediction filtering flag in the target cross-component model. The prediction filtering flag in the target cross-component model indicates whether to filter a prediction value when using the target cross-component model.

Exemplarily, the target cross-component model includes a first cross-component model, and the target prediction filtering flag of the current chroma block is determined according to the prediction filtering flag in the target cross-component model as follows. A prediction filtering flag in the first cross-component model is determined as the target prediction filtering flag. The first cross-component model may be an optimal cross-component model in the candidate cross-component model. In some embodiments, a prediction filtering flag in the optimal cross-component model is directly determined as the target prediction filtering flag of the current chroma block. In some other embodiments, in the first cross-component prediction mode and without weighted fusion, a prediction filtering flag in the optimal cross-component model is determined as the target prediction filtering flag of the current chroma block.

Exemplarily, the target cross-component model includes a first cross-component model and a second cross-component model. That is to say, two or more cross-component models may be determined from the candidate cross-component model based on template costs, and then the prediction value is obtained by performing weighted fusion on the current chroma block according to the two or more cross-component models.

Accordingly, the target prediction filtering flag of the current chroma block is determined according to the prediction filtering flag in the target cross-component model as follows. When a prediction filtering flag in the first cross-component model is a first value and a prediction filtering flag in the second cross-component model is the first value, it is determined that the target prediction filtering flag is the first value. Alternatively, when a prediction filtering flag in the first cross-component model is a first value or a prediction filtering flag in the second cross-component model is the first value, it is determined that the target prediction filtering flag is the first value.

Exemplarily, the first value may be 1, which indicates that the prediction value is to be filtered. In the first cross-component prediction mode and with weighted fusion, a prediction filtering flag of the current chroma block is determined according to prediction filtering flags in two cross-component models for weighted fusion. In some embodiments, a value of the prediction filtering flag of the current chroma block is set to 1 only when both prediction filtering flags in the two cross-component models are 1. In some other embodiments, if one of the prediction filtering flags in the two cross-component models is 1, the value of the prediction filtering flag of the current chroma block may be set to 1.

Exemplarily, the first value may also be 0, which indicates that the prediction value is not to be filtered. A value of a prediction filtering flag of the current chroma block is set to 0 only when both prediction filtering flags in two cross-component models are 0. In some other embodiments, if one of the prediction filtering flags in the two cross-component models is 0, the value of the prediction filtering flag of the current chroma block may be set to 0.

At S1404, when it is determined according to the prediction value that a first cross-component prediction mode is used for the current chroma block, a target cross-component model parameter of the current chroma block is stored, where the target cross-component model is determined according to the one or more cross-component model parameters included in the target cross-component model.

In some embodiments, a current block has a specific storage space (denoted by curCand in this embodiment of the disclosure) for storing cross-component model parameters of the current block for subsequent use. Exemplarily, when the target cross-component model parameter includes a target prediction filtering flag, a target cross-component filtering flag ccInsideFilter of the current chroma block is stored in curCand, which may be denoted by curCand.ccInsideFilter, for subsequent use.

In some embodiments, the target cross-component model parameter further includes at least one of a cross-component prediction mode type, a cross-component model type, a model parameter, or the like. These parameters are also stored in the specific storage space of the current block.

In an encoding process, for a block to be encoded, a cross-component model parameter of a corresponding block may be obtained from a cross-component model parameter storage space of a reconstructed block. Similar to the cross-component model parameter, a prediction filtering flag in a cross-component prediction parameter may also be obtained through inheritance when the first cross-component prediction mode is used for the current block. If the first cross-component prediction mode is used for the current block, a prediction filtering flag ccInsideFilter and other parameters of the current block are stored in curCand (where ccInsideFilter may be denoted by curCand.ccInsideFilter) for subsequent use, thereby improving the encoding efficiency.

In some embodiments, the method further includes the following. When it is determined according to the prediction value that the first cross-component prediction mode is used for the current chroma block, a prediction parameter of the current chroma block is determined, where the prediction parameter indicates that the first cross-component prediction mode is used for the current chroma block. The prediction parameter is encoded, and obtained encoded bits are signalled in a bitstream for the decoding end to read. Exemplarily, when a value of the prediction parameter is 1, it is determined that the first cross-component prediction mode is used, and when the value of the prediction parameter is 0, it is determined that the first cross-component prediction mode is not used.

In some embodiments, when a value of the prediction parameter is 1, the prediction parameter is encoded, and when the value of the prediction parameter is 0, the prediction parameter is not encoded. In practice, if the prediction parameter is not encoded, the decoding end may determine that the value of the prediction parameter is a default value.

Exemplarily, when the first cross-component prediction mode is a DDCCP mode, an encoding process is specifically as follows.

If the encoding end tries to use a decoder derived cross-component mode for the current chroma block, the encoding end obtains a decoder cross-component model list DDList according to a derivation process of this mode. A size of this list is numDdccpModes, and a cross-component model, i.e., DDList[0], with an optimal template cost value is obtained. Then, whether weighted fusion is needed is determined according to DDlist[0].isFusion. If weighted fusion is not needed, the cross-component model denoted by DDlist[0] is used for prediction. If weighted fusion is needed, cross-component models denoted by DDlist[0] and DDlist[1] are used for prediction and then weighted fusion is performed. For each model, a prediction value is accordingly processed according to a prediction filtering flag in a current model, to obtain a prediction value of the decoder derived cross-component mode. An RDO cost value of the decoder derived cross-component mode is determined by performing RDO calculation according to the prediction value. In addition, an RDO cost value of a current mode is compared with an optimal cost value. If the RDO cost value of the current mode is less than the optimal cost value, a flag decoderDerivedCcpMode of the current mode is set to 1, and a value of a prediction filtering flag in DDList[0] is set to a value of a prediction filtering flag ccInsideFlag of the current chroma block. Furthermore, the value of ccInsideFlag is stored in curCand.ccInsideFlag for subsequent use. In the encoding process, for a block to be encoded, a cross-component model parameter of a corresponding block may be obtained from a cross-component model parameter storage space of an encoded block, thereby fully leveraging an improvement in prediction accuracy brought by the prediction filtering technology.

According to the above scheme, the value of the prediction filtering flag in DDList[0] is set to the value of the prediction filtering flag ccInsideFlag of the current chroma block. In some other embodiments, in the DDCCP mode, when weighted fusion is needed, the value of the prediction filtering flag ccInsideFlag of the current chroma block is determined according to values of prediction filtering flags in two candidates for weighted fusion. For example, the value of ccInsideFlag of the current block is set to 1 only when both prediction filtering flags in the two candidates are 1. Another scheme is to set the value of ccInsideFlag of the current block to 1 if one of the prediction filtering flags in the two candidates is 1.

Further, performance test is performed on the technical solution provided in embodiments of the disclosure. Performance test results of an original DDCCP technology are illustrated in Table 2, performance test results of a DDCCP technology provided in embodiments of the disclosure are illustrated in Table 3, and performance comparison between this disclosure and the original scheme is illustrated in Table 4.

**Table 2**

| | All Intra Main 10 | | | | | | |
|---|---|---|---|---|---|---|---|
| | Over ECM11.0 | | | | | | |
| | Y | U | V | EncT | DecT | EncVmPeak | DecVmPeak |
| Class A1 | -0.10% | -0.43% | -0.36% | 101.4% | 102.2% | 100.5% | 99.9% |
| Class A2 | -0.15% | -0.30% | -0.42% | 101.8% | 101.8% | 100.0% | 99.9% |
| Class B | -0.07% | -0.14% | -0.20% | 101.3% | 102.7% | 100.8% | 100.1% |
| Class C | -0.06% | 0.07% | 0.01% | 101.9% | 101.4% | 100.0% | 100.1% |
| Class E | -0.11% | 0.00% | 0.01% | 101.7% | 103.2% | 100.0% | 100.1% |
| Overall | -0.09% | -0.14% | -0.18% | 101.6% | 102.3% | 100.3% | 100.0% |
| Class D | -0.07% | 0.09% | 0.04% | 102.5% | 100.3% | 100.0% | 100.0% |
| Class F | -0.04% | -0.09% | -0.05% | 100.5% | 100.8% | 100.9% | 100.0% |

**Table 3**

| | All Intra Main 10 | | | | |
|---|---|---|---|---|---|
| | Over ECM11.0 | | | | |
| | Y | U | V | EncT | DecT |
| Class A1 | -0.12% | -0.60% | -0.45% | #NUM! | #NUM! |
| Class A2 | -0.15% | -0.27% | -0.40% | #NUM! | #NUM! |
| Class B | -0.08% | -0.08% | -0.25% | #NUM! | #NUM! |
| Class C | -0.07% | -0.06% | 0.05% | #NUM! | #NUM! |
| Class E | -0.13% | -0.35% | -0.06% | #NUM! | #NUM! |
| Overall | -0.11% | -0.24% | -0.21% | #NUM! | #NUM! |
| Class D | -0.08% | 0.07% | 0.12% | #NUM! | #NUM! |
| Class F | -0.07% | -0.03% | 0.08% | #NUM! | #NUM! |

**Table 4**

| | All Intra Main 10 | | | | |
|---|---|---|---|---|---|
| | Over ECM11.0 | | | | |
| | Y | U | V | EncT | DecT |
| Class A1 | -0.02% | -0.17% | -0.10% | #NUM! | #NUM! |
| Class A2 | 0.00% | 0.02% | 0.02% | #NUM! | #NUM! |
| Class B | -0.01% | 0.06% | -0.05% | #NUM! | #NUM! |
| Class C | -0.02% | -0.12% | 0.04% | #NUM! | #NUM! |
| Class E | -0.03% | -0.35% | -0.07% | #NUM! | #NUM! |
| Overall | -0.01% | -0.09% | -0.03% | #NUM! | #NUM! |
| Class D | -0.01% | -0.02% | 0.08% | #NUM! | #NUM! |
| Class F | -0.04% | 0.06% | 0.13% | #NUM! | #NUM! |

As can be seen from Table 3, in the DDCCP mode, by storing the prediction filtering flag of the current block for inheritance and use by subsequent chroma blocks without introducing additional bit consumption, adaptive prediction operations can be performed according to the inherited parameter, thereby improving the coding efficiency.

In yet another embodiment of the disclosure, based on the same inventive concept of the foregoing embodiments, reference is made to FIG. 15 which is a schematic structural diagram of an encoder provided in embodiments of the disclosure. As illustrated in FIG. 15, the encoder 150 may include a first determining unit 1501, a first prediction unit 1502, and a first storage unit 1503. The first determining unit 1501 is configured to determine a candidate cross-component model for a current chroma block, where the candidate cross-component model includes one or more cross-component models, and the cross-component model includes one or more cross-component model parameters. The first determining unit 1501 is further configured to determine a target cross-component model for the current chroma block from the candidate cross-component model. The first prediction unit 1502 is configured to determine a prediction value of the current chroma block according to one or more cross-component model parameters included in the target cross-component model. The first storage unit 1503 is configured to store a target cross-component model parameter of the current chroma block, when it is determined according to the prediction value that a first cross-component prediction mode is used for the current chroma block, where the target cross-component model is determined according to the one or more cross-component model parameters included in the target cross-component model.

The first prediction unit 1502 is configured to determine a prediction parameter of the current chroma block, when it is determined according to the prediction value that the first cross-component prediction mode is used for the current chroma block, where the prediction parameter indicates that the first cross-component prediction mode is used for the current chroma block. In some embodiments, the encoder 150 may further include an encoding unit. The encoding unit is configured to encode the prediction parameter and signal obtained encoded bits in a bitstream.

It may be understood that, functional units of the encoder also perform the encoding method described in any one of the foregoing embodiments.

It may be understood that in embodiments of the disclosure, the "unit" may be part of the circuitry, part of the processor, part of the program or software, etc., and of course may also be a module, or may be non-modular. In addition, various components described in embodiments of the disclosure may be integrated into one processing unit or may be present as a number of physically separated units, or two or more units may be integrated into one. The integrated unit may take the form of hardware or a software functional module.

If the integrated unit is implemented as a software functional module and not sold or used as a stand-alone product, the integrated unit may be stored in a computer-readable storage medium. Based on such understanding, the technical solution of the embodiments in essential, or a part that contributes to the prior art, or all or part of the technical solution, may be embodied in the form of a software product. The computer software product is stored in a storage medium and includes a number of instructions to enable a computer device (which may be a personal computer, a server, or a network device, etc.) or processor to perform all or part of the operations of the method described in the embodiments. The aforementioned storage medium includes a USB stick, a removable hard disk, a read only memory (ROM), a random access memory (RAM), a diskette or a CD-ROM, and other media that may store program codes.

Thus, embodiments of the disclosure provide a computer-readable storage medium, which is applied to the encoder 150 and stores a computer program, the computer program implementing the method described in any one of the foregoing embodiments when executed by the first processor.

Embodiments of the disclosure provide a computer-readable storage medium. The computer-readable storage medium is configured to store a bitstream generated according to the encoding method.

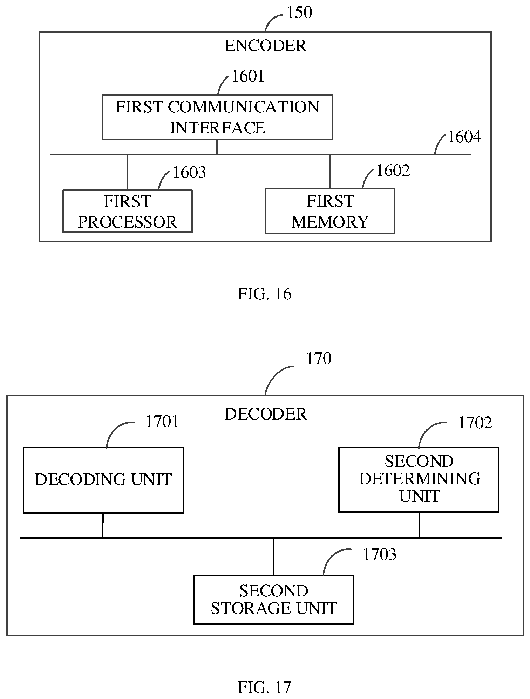

Based on the structure of the encoder 150 and the computer-readable storage medium, reference is made to FIG. 16 which is a schematic diagram of a specific hardware structure of the encoder 150 provided in embodiments of the disclosure. As illustrated in FIG. 16, the encoder 150 may include a first communication interface 1601, a first memory 1602, and a first processor 1603. The components are coupled together via a first bus system 1604. It may be understood that the first bus system 1604 is configured to enable connection and communication between these components. The first bus system 1604 includes a power bus, a control bus, and a status signal bus in addition to a data bus. For the sake of clarity, however, the various buses are labelled as the first bus system 1604 in FIG. 16.

The first communication interface 1601 is configured to receive and transmit signals during information transmission with other external network elements.

The first memory 1602 is configured to store a computer program executable by the first processor 1603.

The first processor 1603 is configured to, when executing the computer program, determine a candidate cross-component model for a current chroma block, where the candidate cross-component model includes one or more cross-component models, and the cross-component model includes one or more cross-component model parameters; determine a target cross-component model for the current chroma block from the candidate cross-component model; determine a prediction value of the current chroma block according to one or more cross-component model parameters included in the target cross-component model; and store a target cross-component model parameter of the current chroma block, when it is determined according to the prediction value that a first cross-component prediction mode is used for the current chroma block, where the target cross-component model is determined according to the one or more cross-component model parameters included in the target cross-component model.

It will be appreciated that the first memory 1602 in embodiments of the disclosure may be a transitory memory or non-transitory memory, or may include both transitory and non-transitory memory. In particular, the non-transitory memory may be an ROM, a programmable ROM (PROM), an erasable PROM (EPROM), an electrically EPROM (EEPROM), or a flash memory. The transitory memory may be an RAM, which is used as an external cache. By way of illustration, but not limitation, many forms of RAM are available, such as a static RAM (SRAM), a dynamic RAM (DRAM), a synchronous DRAM (SDRAM), a double data rate synchronous random access memory (DDRSDRAM), an enhanced SDRAM (ESDRAM), a synchlink DRAM (SLDRAM), and a direct Rambus RAM (DRRAM). The first memory 1602 of the system and method described in this disclosure is intended to include, but is not limited to, these and any other suitable types of memory.

The first processor 1603 may be an integrated circuit chip with signal processing capabilities. During implementation, the operations in the above method may be accomplished by integrated logic circuitry in the hardware of the first processor 1603 or by instructions in the form of software. The first processor 1603 described above may be a general-purpose processor, a digital signal processor (DSP), an application specific integrated circuit (ASIC), a field programmable gate array (FPGA), or other programmable logic device, discrete gate or transistor logic device, discrete hardware component. The various methods, steps and logic block diagrams disclosed in embodiments of the disclosure may be implemented or performed. The general-purpose processor may be a microprocessor or the processor may also be any conventional processor, etc. The operations in the method disclosed in conjunction with embodiments of the disclosure may be performed directly by the hardware decoder processor or by a combination of hardware and software modules in the decoder processor. The software module may be located in a random memory, flash memory, read-only memory, programmable read-only memory or electrically erasable programmable memory, registers and other storage media mature in the art. The storage medium is located in the first memory 1602, and the first processor 1603 reads the information in the first memory 1602 and completes the operations of the above method in combination with its hardware.

It will be appreciated that these embodiments described in this disclosure may be implemented in hardware, software, firmware, middleware, microcode, or combinations thereof. For hardware implementations, the processing unit may be implemented in one or more ASIC, DSP, DSP device (DSPD), programmable logic device (PLD), FPGA, general-purpose processor, controller, microcontroller, microprocessor, other electronic unit for performing the functions described in this disclosure, or a combination thereof. For software implementations, the technology described in this disclosure may be implemented by means of modules (e.g. procedures, functions, etc.) that perform the functions described in this disclosure. The software code may be stored in a memory and executed by a processor. The memory may be implemented in the processor or outside the processor.

Optionally, as another embodiment, the first processor 1603 is further configured to perform the method described in any one of the foregoing embodiments when executing the computer program.

An encoder is provided in this embodiment. In the encoder, by storing the target cross-component model parameter of the current chroma block for inheritance and use by subsequent chroma blocks without introducing additional bit consumption, adaptive prediction operations can be performed according to the inherited parameter, thereby improving the encoding efficiency.

In still another embodiment of the disclosure, based on the same inventive concept of the foregoing embodiments, reference is made to FIG. 17 which is a schematic structural diagram of a decoder 170 provided in embodiments of the disclosure. As illustrated in FIG. 17, the decoder 170 may include a decoding unit 1701, a second determining unit 1702, and a second storage unit 1703. The decoding unit 1701 is configured to decode a bitstream to determine a prediction parameter of a current chroma block. The second determining unit 1702 is configured to determine a candidate cross-component model for the current chroma block, when the prediction parameter indicates that a first cross-component prediction mode is used for the current chroma block, where the candidate cross-component model includes one or more cross-component models, and the cross-component model includes one or more cross-component model parameters. The second determining unit 1702 is further configured to determine a target cross-component model for the current chroma block from the candidate cross-component model; and determine a target cross-component model parameter of the current chroma block according to one or more cross-component model parameters included in the target cross-component model. The second storage unit 1703 is configured to store the target cross-component model parameter.

It may be understood that, functional units of the decoder also perform the decoding method described in any one of the foregoing embodiments.

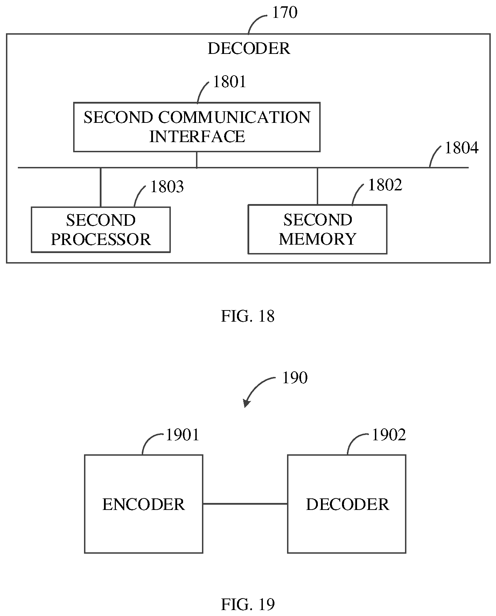

Based on the structure of the decoder 170 and the computer-readable storage medium, reference is made to FIG. 18 which is a schematic diagram of a specific hardware structure of the decoder 170 provided in embodiments of the disclosure. As illustrated in FIG. 18, the decoder 170 may include a second communication interface 1801, a second memory 1802, and a second processor 1803. The components are coupled together via a second bus system 1804. It may be understood that the second bus system 1804 is configured to enable connection and communication between these components. The second bus system 1804 includes a power bus, a control bus, and a status signal bus in addition to a data bus. For the sake of clarity, however, the various buses are labelled as second bus system 1804 in FIG. 18.

The second communication interface 1801 is configured to receive and transmit signals during information transmission with other external network elements.

The second memory 1802 is configured to store a computer program executable by the second processor 1803.

The second processor 1803 is configured to, when executing the computer program, decode a bitstream to determine a prediction parameter of a current chroma block; determine a candidate cross-component model for the current chroma block, when the prediction parameter indicates that a first cross-component prediction mode is used for the current chroma block, where the candidate cross-component model includes one or more cross-component models, and the cross-component model includes one or more cross-component model parameters; determine a target cross-component model for the current chroma block from the candidate cross-component model; determine a target cross-component model parameter of the current chroma block according to one or more cross-component model parameters included in the target cross-component model; and store the target cross-component model parameter.

Optionally, as another embodiment, the second processor 1803 is further configured to perform the method described in any one of the foregoing embodiments when executing the computer program.

It may be understood that, in terms of hardware function, the second memory 1802 is similar to the first memory 1602, and the second processor 1803 is similar to the first processor 1603, which will not be elaborated herein.

A decoder is provided in this embodiment. In the decoder, by storing the target cross-component model parameter of the current chroma block for inheritance and use by subsequent chroma blocks without introducing additional bit consumption, adaptive prediction operations can be performed according to the inherited parameter, thereby improving the decoding efficiency.

In still another embodiment of the disclosure, reference is made to FIG. 19 which is a schematic structural diagram of a coding system provided in embodiments of the disclosure. As illustrated in FIG. 19, the coding system 190 may include an encoder 1901 and a decoder 1902.

In embodiments of the disclosure, the encoder 1901 may be an encoder described in any one of the foregoing embodiments, and the decoder 1902 may be a decoder described in any one of the foregoing embodiments.

It may be noted that in this disclosure, the terms "include", "comprise" or any other variant thereof are intended to cover non-exclusive inclusion, such that a process, method, article, or apparatus including a range of elements includes not only those elements, but also includes other elements that are not explicitly listed or are also inherent to such a process, method, article, or apparatus. Without further limitation, an element qualified by the statement "including a..." does not preclude the existence of another identical element in the process, method, article, or apparatus including that element.

The above serial numbers of the embodiments of the disclosure are for descriptive purposes only and do not represent the merits of the embodiments.

The methods disclosed in the several method embodiments provided in this disclosure may be combined in any way to obtain new method embodiments without conflict. The features disclosed in the several product embodiments provided in this disclosure may be combined in any way to obtain new product embodiments without conflict. The features disclosed in several method or apparatus embodiments provided in this disclosure may be combined in any way to obtain new method embodiments or apparatus embodiments without conflict.

The foregoing is only a specific implementation of the disclosure, but the protection scope of the disclosure is not limited thereto, and any variation or substitution readily conceivable by any person skilled in the art within the technical scope disclosed in the present disclosure shall be covered by the protection scope of the disclosure. Accordingly, the protection scope of this disclosure shall be governed by the protection scope of the appended claims.

### INDUSTRIAL APPLICABILITY

An encoding method, a decoding method, an encoder, a decoder, and a storage medium are provided in embodiments of the disclosure. At both the decoding end and the encoding end, when a first cross-component prediction mode is used for a current chroma block, a target cross-component model for the current chroma block is determined from a candidate cross-component model. A target cross-component model parameter of the current chroma block is determined according to one or more cross-component model parameters included in the target cross-component model. The target cross-component model parameter is stored. As such, by storing the target cross-component model parameter of the current chroma block for inheritance and use by subsequent chroma blocks without introducing additional bit consumption, adaptive prediction operations can be performed according to the inherited parameter, thereby improving the coding efficiency.

## Claims

1. A decoding method, applied to a decoder and comprising:
decoding a bitstream to determine a prediction parameter of a current chroma block;
determining a candidate cross-component model for the current chroma block, in response to the prediction parameter indicating that a first cross-component prediction mode is used for the current chroma block, wherein the candidate cross-component model comprises one or more cross-component models, and the cross-component model comprises one or more cross-component model parameters;
determining a target cross-component model for the current chroma block from the candidate cross-component model;
determining a target cross-component model parameter of the current chroma block according to one or more cross-component model parameters comprised in the target cross-component model; and
storing the target cross-component model parameter.

2. The method of claim 1, wherein the target cross-component model parameter comprises a target prediction filtering flag.

3. The method of claim 2, wherein determining the target cross-component model parameter of the current chroma block according to the one or more cross-component model parameters comprised in the target cross-component model comprises:
determining the target prediction filtering flag of the current chroma block according to a prediction filtering flag in the target cross-component model.

4. The method of claim 2, wherein the target cross-component model comprises a first cross-component model, and determining the target prediction filtering flag of the current chroma block according to the prediction filtering flag in the target cross-component model comprises:
determining a prediction filtering flag in the first cross-component model as the target prediction filtering flag.

5. The method of claim 2, wherein the target cross-component model comprises a first cross-component model and a second cross-component model, and determining the target prediction filtering flag of the current chroma block according to the prediction filtering flag in the target cross-component model comprises:
determining that the target prediction filtering flag is a first value, in response to a prediction filtering flag in the first cross-component model being the first value and a prediction filtering flag in the second cross-component model being the first value; or
determining that the target prediction filtering flag is a first value, in response to a prediction filtering flag in the first cross-component model being the first value or a prediction filtering flag in the second cross-component model being the first value.

6. The method of claim 2, wherein the target cross-component model parameter further comprises at least one of a cross-component prediction mode type, a cross-component model type, or a model parameter.

7. The method of any one of claims 1 to 6, wherein the candidate cross-component model comprises at least one of: one or more preset cross-component models, or one or more cross-component models in a candidate list of cross-component prediction (CCP) merge modes for the current chroma block.

8. The method of any one of claims 1 to 7, wherein determining the target cross-component model for the current chroma block from the candidate cross-component model comprises:
decoding the bitstream to determine an index of the target cross-component model; and
determining the target cross-component model for the current chroma block from the candidate cross-component model according to the index of the target cross-component model.

9. The method of any one of claims 1 to 7, wherein determining the target cross-component model for the current chroma block from the candidate cross-component model comprises:
determining a prediction cost value of the candidate cross-component model based on a template of the current chroma block; and
determining the target cross-component model for the current chroma block according to the prediction cost value.

10. The method of claim 9, wherein:
determining the prediction cost value of the candidate cross-component model based on the template of the current chroma block comprises:
determining a first prediction sample value of the template of the current chroma block by performing prediction on the template of the current chroma block according to one cross-component model and/or at least two cross-component models in the candidate cross-component model; and
determining prediction cost values of the one cross-component model or the at least two cross-component models according to the first prediction sample value and a first reconstructed sample value of the template of the current chroma block; and
determining the target cross-component model for the current chroma block according to the prediction cost value comprises:
determining a first cross-component model corresponding to a minimum prediction cost value according to the prediction cost values of the one cross-component model or the at least two cross-component models;
based on a determination, according to a fusion flag in the first cross-component model, that weighted fusion prediction is not to be performed on the current chroma block, determining that prediction is to be performed on the current chroma block according to the first cross-component model; and
based on a determination, according to the fusion flag in the first cross-component model, that weighted fusion prediction is to be performed on the current chroma block, determining a second cross-component model, and performing weighted fusion prediction on the current chroma block according to the first cross-component model and the second cross-component model, wherein the second cross-component model comprises one or more cross-component models.

11. The method of claim 1, further comprising:
determining a prediction value of the current chroma block according to the one or more cross-component model parameters comprised in the target cross-component model; and
determining a reconstructed value of the current chroma block according to the prediction value.

12. An encoding method, applied to an encoder and comprising:
determining a candidate cross-component model for a current chroma block, wherein the candidate cross-component model comprises one or more cross-component models, and the cross-component model comprises one or more cross-component model parameters;
determining a target cross-component model for the current chroma block from the candidate cross-component model;
determining a prediction value of the current chroma block according to one or more cross-component model parameters comprised in the target cross-component model; and
storing a target cross-component model parameter of the current chroma block, in response to determining, according to the prediction value, that a first cross-component prediction mode is used for the current chroma block, wherein the target cross-component model is determined according to the one or more cross-component model parameters comprised in the target cross-component model.

13. The method of claim 12, further comprising:
determining a prediction parameter of the current chroma block, in response to determining, according to the prediction value, that the first cross-component prediction mode is used for the current chroma block, wherein the prediction parameter indicates that the first cross-component prediction mode is used for the current chroma block; and
encoding the prediction parameter and signalling obtained encoded bits in a bitstream.

14. The method of claim 12 or 13, further comprising:
determining a reconstructed value of the current chroma block according to the prediction value;
determining a prediction cost value of the first cross-component prediction mode according to the reconstructed value and an original value of the current chroma block;
determining that the first cross-component prediction mode is used for the current chroma block, in response to the prediction cost value of the first cross-component prediction mode being a minimum prediction cost value of the current chroma block; and
determining that the first cross-component prediction mode is not used for the current chroma block, in response to the prediction cost value of the first cross-component prediction mode being not the minimum prediction cost value of the current chroma block.

15. The method of claim 12, wherein the target cross-component model parameter comprises a target prediction filtering flag.

16. The method of claim 15, further comprising:
determining the target prediction filtering flag of the current chroma block according to a prediction filtering flag in the target cross-component model.

17. The method of claim 16, wherein the target cross-component model comprises a first cross-component model, and determining the target prediction filtering flag of the current chroma block according to the prediction filtering flag in the target cross-component model comprises:
determining a prediction filtering flag in the first cross-component model as the target prediction filtering flag.

18. The method of claim 16, wherein the target cross-component model comprises a first cross-component model and a second cross-component model, and determining the target prediction filtering flag of the current chroma block according to the prediction filtering flag in the target cross-component model comprises:
determining that the target prediction filtering flag is a first value, in response to a prediction filtering flag in the first cross-component model being the first value and a prediction filtering flag in the second cross-component model being the first value; or
determining that the target prediction filtering flag is a first value, in response to a prediction filtering flag in the first cross-component model being the first value or a prediction filtering flag in the second cross-component model being the first value.

19. The method of claim 16, wherein the target cross-component model parameter further comprises at least one of a cross-component prediction mode type, a cross-component model type, or a model parameter.

20. The method of any one of claims 12 to 19, wherein the candidate cross-component model comprises at least one of: one or more preset cross-component models, or one or more cross-component models in a candidate list of cross-component prediction (CCP) merge modes for the current chroma block.

21. The method of any one of claims 12 to 20, wherein:
determining the target cross-component model for the current chroma block from the candidate cross-component model comprises:
determining the target cross-component model for the current chroma block by traversing the candidate cross-component model; and
the method further comprises:
encoding an index of the target cross-component model, in response to determining, according to the prediction value, that the first cross-component prediction mode is used for the current chroma block.

22. The method of any one of claims 12 to 20, wherein determining the target cross-component model for the current chroma block from the candidate cross-component model comprises:
determining a prediction cost value of the candidate cross-component model based on a template of the current chroma block; and
determining the target cross-component model for the current chroma block according to the prediction cost value.

23. The method of claim 22, wherein:
determining the prediction cost value of the candidate cross-component model based on the template of the current chroma block comprises:
determining a first prediction sample value of the template of the current chroma block by performing prediction on the template of the current chroma block according to one cross-component model and/or at least two cross-component models in the candidate cross-component model; and
determining prediction cost values of the one cross-component model or the at least two cross-component models according to the first prediction sample value and a first reconstructed sample value of the template of the current chroma block; and
determining the target cross-component model for the current chroma block according to the prediction cost value comprises:
determining a first cross-component model corresponding to a minimum prediction cost value according to the prediction cost values of the one cross-component model or the at least two cross-component models;
based on a determination, according to a fusion flag in the first cross-component model, that weighted fusion prediction is not to be performed on the current chroma block, determining that prediction is to be performed on the current chroma block according to the first cross-component model; and
based on a determination, according to the fusion flag in the first cross-component model, that weighted fusion prediction is to be performed on the current chroma block, determining a second cross-component model, and performing weighted fusion prediction on the current chroma block according to the first cross-component model and the second cross-component model, wherein the second cross-component model comprises one or more cross-component models.

24. An encoder, comprising a first determining unit, a first prediction unit, and a first storage unit, wherein:
the first determining unit is configured to determine a candidate cross-component model for a current chroma block, wherein the candidate cross-component model comprises one or more cross-component models, and the cross-component model comprises one or more cross-component model parameters;
the first determining unit is further configured to determine a target cross-component model for the current chroma block from the candidate cross-component model;
the first prediction unit is configured to determine a prediction value of the current chroma block according to one or more cross-component model parameters comprised in the target cross-component model; and
the first storage unit is configured to store a target cross-component model parameter of the current chroma block, in response to determining, according to the prediction value, that a first cross-component prediction mode is used for the current chroma block, wherein the target cross-component model is determined according to the one or more cross-component model parameters comprised in the target cross-component model.

25. An encoder, comprising a first memory and a first processor, wherein:
the first memory is configured to store a computer program executable by the first processor; and
the first processor is configured to perform the method of any one of claims 12 to 23 when executing the computer program.

26. A decoder, comprising a decoding unit, a second determining unit, and a second storage unit, wherein:
the decoding unit is configured to decode a bitstream to determine a prediction parameter of a current chroma block;
the second determining unit is configured to determine a candidate cross-component model for the current chroma block, in response to the prediction parameter indicating that a first cross-component prediction mode is used for the current chroma block, wherein the candidate cross-component model comprises one or more cross-component models, and the cross-component model comprises one or more cross-component model parameters;
the second determining unit is further configured to determine a target cross-component model for the current chroma block from the candidate cross-component model; and determine a target cross-component model parameter of the current chroma block according to one or more cross-component model parameters comprised in the target cross-component model; and
the second storage unit is configured to store the target cross-component model parameter.

27. A decoder, comprising a second memory and a second processor, wherein:
the second memory is configured to store a computer program executable by the second processor; and
the second processor is configured to perform the method of any one of claims 1 to 11 when executing the computer program.

28. A computer-readable storage medium configured to store a bitstream generated according to the encoding method of any one of claims 12 to 23.

29. A computer-readable storage medium configured to store a computer program which, when executed, is operable to implement the method of any one of claims 1 to 11 or the method of any one of claims 12 to 23.
